# EUROPEAN PATENT SPECIFICATION

(11) **EP 0 594 892 B1**
(45) Date of publication and mention of the grant of the patent: **03.03.1999**
(21) Application number: 92122090.1
(22) Date of filing: 29.12.1992
(51) Int. Cl.: A01N 25/18, C08J 5/04, B65D 65/40, D04H 5/04, C08L 67/02

(54) **Reinforced 100% polyester material used as applicator for holding pest control agents and process for its manufacture**
Verstärkter Werkstoff aus 100% tigem Polyester der als Applikator zur Aufnahme von Schädlingsbekämpfungsmittel verwendet wird und Verfahren zu seiner Herstellung
Matériau renforcé constitué à 100% par du polyester utilisé comme applicateur pour retenir des pesticides et son procédé de fabrication

(30) Priority: 25.09.1992 BR 9203835
(43) Date of publication of application: 04.05.1994
(73) Proprietor: CASA BERNARDO Ltda, Sao Vicente, Sao Paulo (BR)
(72) Inventor: Spada Bernardo, Maria Cristina, Santos, Sao Paulo (BR)
(74) Representative: Prato, Roberto

(56) References cited:
- EP-A- 0 131 759
- EP-A- 0 411 656
- EP-A- 0 446 822
- DATABASE WPI, Derwent Publications Ltd., London (GB); AN 85-033452 (06)

## Description

This Patent Application regards a "100% Polyester Reinforced Material for the manufacture of laminated film to hold a pest control agent, Process for the manufacture of a laminated film. Reinforced Laminated Film and Applicator containing a fumigating agent", filed as a complement to Priority Guarantee no. 9203835, dated 09/25/92, and meant for the production of a laminated material destined to manufacture an applicator for the control of pests which may be found in grain, processed food, animal fodder, non-edible manufactured goods, such as wood and others stored in warehouses, silos, holds of vessels, boats, waggons and others, which stands out because it ensures the release of phosphine gas, through the product, preferably solid, contained in the applicator, rearting with air humidity; while, due to the entirely innovative features of the laminated film intrinsic to the final applicator, a highly improved fumigation efficiency rate and subsequent removal of toxic residue is achieved, in comparison with similar ones which the field often resorts to.

It is well known that grain storage, whether simple storing in warehouse, silos and such, or through carriage in vessels and such craft, must of necessity rely on an efficient means of disinfesting of any pests eventually found therein, which is generally done by using, in a balanced and rational way, a fumigating product, in particular a metallic phosphide, preferably aluminium phosphide, hydrolysable through the action of air humidity, which reaction triggers the release of the toxic gas phosphine which is lethal to pests, until the entire phosphine content is released. To this end, the premises must be kept tightly closed and only be opened after gas-activity period has elapsed: in such ideal application conditions, the pesticide agent is packed, as various measured doses, inside a gas and humidity-permeable wrapping.

Needless to say, in view of the toxic nature of the metallic phosphide, it is required that no direct contact between the latter and the grain occurs, and to this end, one of the methods of rational distribution in the bulk of the grain is the parcelling out of small envelopes or bags, known in the market as "sachets", each containing a predetermined quantity of metallic phosphide, preferably aluminium phosphide, as required for the efficient disinfestation of the premises.

The aforementioned sachets must of necessity possess certain characteristics to achieve the desired effect. Thus they are made, according to the present state of the art, from material such as paper, non-woven from a cellulose base and/or certain synthetic polymers, always requiring a second element, the linking one. Among the most common examples of such elements, it can be mentioned polyamide, polyesters, polyacrilic compounds, particularly polyacrilamide, as well as glass fibers, or other sealing materials with a lower melting or softening point.

Characteristics pertaining to the material used are vitally important in the case of an applicator as described, not only with regard to the closing, but also with regard to essencial factors such as as humidity and gas permeability, porosity, mechanical resistance, among others, which keep present manufacturers and researchers in the search for constant improvement.

Thus, recently the state of the art learned of a sachet made from TYVEK, a synthetic polymer manufactured by DU PONT, composed of 100% high density polyethylene fibers and a second sealing component. An example of this development is the application for patent BR 8802477 .

Insofar as a general study of the state of the art is concerned, it can be said that the envelope, or paper sachet, one of the first to be developed, is sewn next to the borders with a view to providing a fully sealable and air permeable packaging, in order to allow for the occurrence of the aluminium phosphide reaction, so as to release phosphine gas.

However, use of a product such as paper results in some drawbacks in the finished packaging, namely in the applicator, such as smaller physical resistance and durability, particularly if one considers that such envelopes generally remain under tons of grain, therefore subject to heavy compressive and tensile stress, and tearing. Another negative point is that the packaging sewn or glued next to the border, may allow for leaking of aluminium phosphide, especially through the seams, placing the product in direct contact with the grain, which is undesirable and not recommendable.

With regard to sachets made from a non-woven with a cellulose base and/or from multiple components synthetic polymers, comprising at least one film-forming material to form fibers with a melting or softening point above 165°C and a second material with thermo-plastic properties and a melting or softening point below 145°C, or within the ranges 180 to 235°C and 80° to 120°C respectively, these have limited physical characteristics and during use, may tear or break open, releasing highly toxic aluminium phosphide, which will come into direct contact with the grain undergoing fumigation.

On the other hand, proofers used on synthetic fabrics do not form an even layer during application procedure, resulting in a disproportionate release of phosphine which hinders fumigation, as well as delays water penetration after use, this operation requiring that it be placed in a container with water to accelerate residual phosphide reaction.

With regard to 100% high or low density polyethylene synthetic fabrics, coated on one side with thermoplastic adhesive, they show, like the previous ones, the drawback of other non-wovens, especially with regard to disproportionate release of phosphine, rendering the phosphine gas concentrations very low, particularly close to the sachet surface. Besides, because of the very characteristic of impermeability of this material, it is rendered less efficient when, upon completion of fumigation, it is necessary to neutralize the residual aluminium phosphide by immersion in water.

In view of these and other drawbacks, the inventor envisaged this material, obtained through its own particular process, resulting in a laminated sheet with really extraordinary properties for usage as applicator for hydrolysable phosphides utilized in fumigating different enclosures; this laminated material differing in that it is basically made up from a polymerized reinforced non-woven, of 100% polyester, with its own self-thermosealing characteristics and therefore not requiring the use of glues, pasting, agglutinant or adhesive substances.

The laminated material in question, aside from preserving the physical properties necessary to an efficient performance in the use of metallic phosphide, for example aluminium phosphide, in the disinfesting of grain and others, such as permeability to air humidity and phosphine gas release, retention of aluminium phosphide powder and aluminium hydroxide residue powder, after phosphine is released in full, possesses physical characteristics undoubtedly superior to those of sachets made from paper, compound cellulose with synthetic fibers, and the 100% high density polyethylene sachet, such as TYVEK. The 100 % polyester synthentic polymer is more tear-resistant, both crosswise and lengthwise, which is also the case under tensile stress and friction.

Besides all these aspects, an essential characteristic of the laminated material herein claimed also as an Applicator, and which makes it stand out from the others, is the water permeability rendering possible the deactivating of the aluminium phosphide final residue, as well as the fact that it is self-thermosealable with conventional equipment. This water permeability is an advancement vis-a-vis previous invents, due to the need for deactivating the residue prior to disposal of material after its application to control insects found in stored grain, foodstuffs, etc.

Above characteristic is due to the fact that, in every fumigation procedure, upon completion of application, a solid residual ingredient (nearly imperceptible) remains intact inside the sachet after exposure. Basically, there are two methods of disposing of this residue, viz:
- through airing of bags or sachets in the open air until entire reaction is completed;
- through water deactivating.

Thus, in the particular case of a conventional two-components sachet, the main one being 100% polyethylene high density non-woven ("TYVEK"), with sealant, same is water resistant and, in order to accomplish water deactiviting, it becomes necessary to open the sealed parts and literally discharge the residual powder in the water. Besides increasing contact of persons in charge of application with the toxic powder, this renders procedure extremely slow if water deactivating is to be contemplated.

It is worthwhile mentioning, in this particular, that according to conventional disposal techniques, when gas is released in the atmosphere, it pollutes the environment, and water deactivating was conceived to try and eliminate the problem. However difficulties encountered in such deactivating with applicators made of certain materials did not achieve a final solution.

Another important feature is that material in question possesses fibers rendering it recyclable.

This invent therefore aims at a material especially conceived to accomplish with maximum efficiency all the functions pertaining to the various fumigation stages in different enclosures, eliminating problems, step by step. To that end, a process was created to achieve a laminated single-component material, self-thermosealable and which can be used as an applicator for the fumigation of pests with high efficiency, safety and disposal of residues.

Material developed is basically 100% polyester obtained by a process requiring the use of a grid or reinforcement, fibers and paste with the some original base, namely polyester, processed in accordance with specific steps, so as to achieve a laminated material having the particular characteristics described and which from a technical point of view, is ideally suited for use as fumigating applicator.

Thus, another purpose of the invent is a reinforced 100% polyester laminated material, self-thermosealable.

A third purpose is to form an applicator as a bag or sachet, which can, after application, be placed in a container with water, without requiring opening for deactivating, thus allowing water to come into contact with residual powder for a complete and safe deactivation.

Therefore this invention contemplates, among others, increased safety of persons in charge of applying powder pesticides, and during deactivating of same. In addition to that, it is rendered less harmful to environment, since it opens up the possibility of entirely safe water deactivation, replacing the aeration of toxic gases into the atmosphere or physical contact with residual powder. Further, upon incineration, material contemplated in this invention basically generates carbon dioxide and water.

Another positive feature of this invention is that same includes a fiber and paste adaptation which renders resulting material not biodegradable, accomplishing the task of providing safety not only to the person involved in the application, but also to the environment.

Insofar as application is concerned, the material herein claimed can also be employed in the manufacture of gas-absorbing "pads", in the case of phosphine gas, for use in tightly sealed flasks or this, meant for absorption of any gas eventually produced inside the packaging. Such "absorbent pads" are made of the same material as the applicator and should contain a mixture of non-toxic chemical powder, with the property of absorbing any gases eventually found in the flasks or containers. This characteristic also provides safety to product users, insofar as transport and warehousing is concerned.

The invention is explained in greater detail below and for better understanding, the attached drawings should be referred to, as follows:

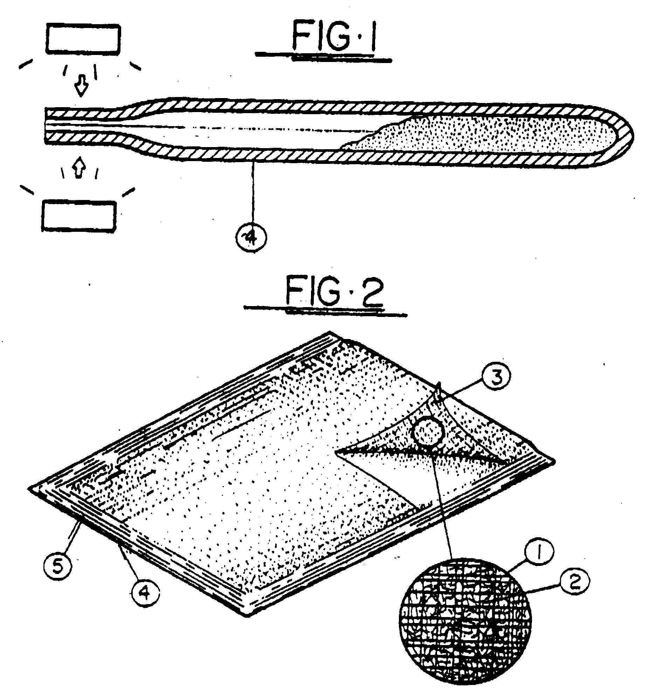

- Figure 1:: Section side view of an applicator sachet, while under preparation, showing the self-thermosealing stage;
- Figure 2:: General view in perspective of an applicator sachet, with enlarged details of material;

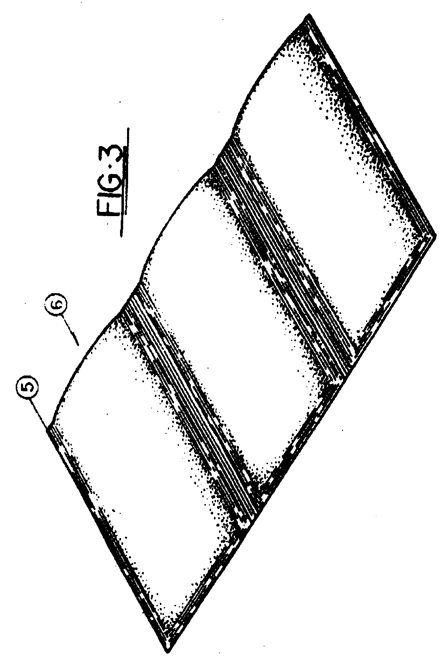

- Figure 3:: General view in perspective of two applicator sachets, showing an example of serial placement or strips.

The "Reinforced 100% polyester Material for the manufacture of laminated film to form an applicator for holding a pest control agent, Process for the manufacture of a laminated film, Reinforced Laminated Film and Applicator containing a fumigating agent", which are the purpose of the patent application, basically consists of a material noteworthy for having a single component base, that is, 100% polyester, with fibers having a melting or softening point of 220 to 280 degrees Centigrade and a paste with thermoplastic properties of same component, with melting or softening point of 90 to 150 degrees Centigrade.

In a more technical vein, it means that the material claimed comprises a grid (1) with polyester yarn of 1 x 1mm to 8 x 8mm warp, preferably 5 x 2 mm and more particularly, 4 x 3mm; weight per area of 8 to 40 g/m2, preferably 15 to 25 g/m2; woof polyester fibers (2) with 1 to 6 dTex, preferably 1,3 to 3,3 dTex, found in a concentration of 30 to 70 g/m2, preferably 50 to 55 g/m2.

The self-thermoplastic characteristic of the material is ensured by the use of a thermoplastic paste (3) with the same original base, that is, polyester, the paste being formed by an aqueous dispersion of a polyester copolymer found in a concentration of 5 to 50 g/m2, preferably 15 to 20 g/m2. Product is free from pigments, agglutinant, opacifying and bleaching agents.

Material as described is obtained through polymeric synthesis of terephtalic acid monomers with ethylene glycol.

For the making of the laminated film, achieved through a continuous process of physical linking, grid (1) has its warp fibers (2) pulled and covered by an upper and lower coating of a mixture of small woof fibers (2), 0.5 to 10 µm, with thermoplastic paste (3). Thereupon agglutination occurs by means of pressure and heat (thermobonding), at 180 to 300 degrees Centigrade temperatures, inside a series of metallic cylinders and presses, with the best bonding temperature at between 240° and 260°C.

With regard to cylinder pressure, this must vary according to final specification of weight per area desired, a detail thus determined "in loco" as a result of the process requirements and not subject to accurate specification. Laminated film (4) thus obtained shows as fundamental characteristic on the use of a single component. The basic product, i.e., polyester, is a reinforced, porous, humidity and gas permeable, impermeable to fine powder, besides showing high mechanical resistance, being heat and pressure self-thermosealable within the range of 80° to 160°C. It enjoys the special feature of not losing its physical characteristics either in the area of the softening point or when wet, while its air permeability is 5 to 25 m3/m2-minutes, preferably 12 to 15 m3/m2-minutes, containing no thermosealable adhesive.

Applicator obtained from this laminated material may be used in the manufacture of envelopes, bags, sachets, interlinked or otherwise, in any geometrical shape, to hold hydrolysable metal phosphide, for example aluminium phosphide, and with flexible connections. In addition, other chemical or pharmaceutical products with the desirable gas and humidity permeable properties and high mechanical resistance can benefit from its use.

Thus the applicator is novel in that it is a sachet for a pesticide compound, made of a gas and water vapor permeable non-woven, water-free, which differs in that it has one single component, 100% polyester, with fibers having a softening or melting point between 200° and 280°C, more precisely between 220° and 270°C and a copolymer with the thermoplastic properties of the same component, polyester, with a melting or softening point of 100° to 140°C, more precisely of 120 to 135°C.

As a final product, applicator has air permeability of 5 to 25 m3/m2 - minutes, more precisely 10 to 18 and best 12 to 15 m3/m2 - minutes.

The Applicator stands out for use as a pest control agent in solid, granulated or powder form, obtained by thermobonding, through pressure, of two layers of laminated film (4), particularly by border sealing (5) in an area of at least 1 cm. In other words, this amounts to saying that the same thermoplastic material mentioned works to render possible the appearance of bonding seams over the entire surface of the product, as desired, in order to ensure permeability to phosphine gas, to air humidity and maintain the capacity of retention of aluminium phosphide, as well as of fine powdered aluminium hydroxide resulting from phosphide reacting with humidity.

The desired sealing or powder retention of sachets obtained according to this invent is due to the fact that the intermediate gaps between the wider fibers of the higher melting point component, are filled by the same lower melting point component.

As stated before, an applicator obtained in accordance with the laminated material of this invention facilitates water penetration at the time of disposal of residual aluminium phosphide, resulting in safety and efficiency in this operation, that is, providing the means for water deactivating to become fully feasible.

For a better understanding of the importance of this invention to the state of the art, it can be said that porosity of non-woven polyester in question is such that gases can pass through without difficulty, although powder, as is the case upon hydrolysis of pesticide compounds, has its passage blocked. Speaking in figures, it can be said that the non-woven pore sizes are quite suitable, that is, more than 0.25 mm, particularly 0.20 to 0.40 mm and preferably between 0.25 and 0.38 mm, which figures in practice prevent pesticide compounds residue from escaping.

A dye may also be introduced in the fiber-forming material; preferably sachets may be dyed in such a way as to receive on being used a clear reference to place of manufacture end, based on previous market experience, a reference to contents.

Naturally, it also works to advantage to have the name of the pesticide, directions for use and warnings about the pesticides or other products printed, according to the invention. Printing is atoxic since it is water soluble and dries instantly.

Weight per square meter of material is preferably between 40 and 110 g/m2, the higher limit, in fact, being determined before the material loses its required flexibility. According to a special invention procedure, the specific weight, or weight per square meter, is preferably 60 to 100 g/m2 and more particularly, 70 to 95 g/m2.

For the manufacture of the sachet or applicator, according to the invention, a piece of the laminated material (4) may be folded and sealed along the sides. Through the remaining opening, the solid, granulated or powdered pesticide may then be poured in. Thereafter, the remaining opening is also closed with special equipment.

Another possibility is the manufacture of the applicator sachet (6) in an automatic bagging machine for serial tube bags, already available in the state of the art. Naturally, in general, it is especially convenient for the manufacture and/or filling of bags, according to the invention to use devices which are found on the market in various forms. Thus, for example, suitable automatic devices may be found, based on heat and pressure sealing or ultrasound sealing.

Laminated material claimed may be used for the manufacture of square, rectangular or tubular sachets or of any other geometrical form, interlinked or otherwise, with no limitation on dimensions, such as length, width, quantity of interlinked bags, which may vary according to the applicator and application characteristics.

After closing the bag, in accordance with the invention the pesticide compound is completely closed in, so that the powder resulting from its decomposition, can no longer escape from the mentioned bag, which, holding the pesticide may be placed right into the foodstuffs about to be fumigated.

Special packaging is used for storage and transportation of sachets in a safe and practical way, avoiding contact with air humidity, prior to its application.

In addition, material may be used as gas absorber, such as phosphine, making up "pads" for use in hermetically sealed flasks or tins, being such pads made of the same material as the bags, with a mixture of chemical non-toxic powder for the absorption of gases eventually found in flasks, containers or other kinds of packing.

### PRACTICAL TESTS

The applicator bag containing the pesticide manufactured with the 100% non-woven polyester polymer was submitted to some practical tests so as to verify its behaviour under possible misuse.

The bags, according to the invention were filled with 34g of aluminium phosphide (normal formula of Applicant). Results were as follows:

### DRIP TEST

A bag was placed in a glass vat of 2-liter capacity. Through a drip funnel, water at 70°C was dripped onto the bag during one hour, at the rate of one drop per second. The test was performed at room temperature, no ignition having occurred in the bag.

### SPRINKLE TEST

The bag was placed in a glass vat of 2-liter capacity; 10 ml of water, at room temperature, were sprayed on same by means of a sprinkler. For the full extent of one hour, the bag was sprayed every fifteen minutes with 10 ml of water. A test was performed at room temperature no ignition having occurred in the bag.

### BATH TEST

The bag was placed in a metallic container and water at room temperature added until bag was covered. A test was performed at room temperature and it was found that, after four hours, no ignition occurred in the bag.

### IMMERSION TEST

1,000 ml of water at room temperature was added to a beaker and the bag was immersed therein from 5 to 10 seconds. After removing from water, the bag was shaken to eliminate water sticking to its walls. A test was performed at room temperature and after letting it rest for four hours, it was found that no ignition occurred in the bag.

### POWDER TEST

15 grams of aluminium phosphide in powder were weighed and placed in a 150 ml narrow-shaped beaker. The whole was then heated upto 50°C by means of an electric heater. Upon reaching a temperature of 35°C, 5 ml of water at room temperature were added with a pipette. The beaker was left to rest for an hour at room temperature and no ignition of the bag occurred.

Proof of the better physical quality of the bag material, contemplated under this Patent application, as compared with other existing materials, can be ascertained from the results of tests performed, in accordance with the following table:

| | Non-woven 100% Polyester | Non-woven 100% polyethylene | Non-woven Cellulose/Fiber |
|---|---|---|---|
| Weight/area (g/m2) | 95 | 75 | 87 |
| Thickness (mm) | 0,170 | 0,210 | 0,300 |
| Resistance (kgf/5cm) Stretching(%) | | | |
| Breaking point Lengthwise Resistance (kgf/5cm) Stretching(%) | 36/30 | 38/60 | 19/24 |
| Breaking point Crosswise Tear resistance (kgf) | 26,5/33 | 45/70 | 3,8/35 |
| Lengthwise Tear resistance (kgf) | 8,4 | 1,60 | 0,25 |
| Crosswise Abrasion 1,000 cycles; | 7,7 | 2,00 | 0,45 |
| strain 1 kgf/cm2 lengthwise | None of the materials showed wear. | | |

## Claims

1. "Reinforced 100% Polyester Material for the manufacture of laminated film to form an applicator for holding a post control agent", characterized by a reinforced 100% polyester material, comprising a grid(1) of polyester yarn of 1 x 1mm to 8 x 8 mm texture, weight per area of 8 to 40 g/m2; polyester woof fibers (2) of 1 to 6 dTex found in a 30 to 70 g/m2 concentration; polyester copolymer thermoplastic paste found in a 5 to 50 g/m2 concentration.

2. "Reinforced 100% Polyester Material", according to Claim 1, characterized by the fact that grid texture(1) is preferably 5 x 2mm.

3. "Reinforced 100% Polyester Material", according to Claims 1 and 2, characterized by the fact that grid texture (1) is particularly 4 x 3 mm.

4. "Reinforced 100% Polyester Material", according to Claim 1, characterized by the fact that weight per area of the grid is preferably between 15 and 25 g/m2.

5. "Reinforced 100% Polyester Material", according to Claim 1, characterized by the fact that the woof fibers are preferably between 1.3 and 3.3 dTex and are found in a preferable concentration of 50 to 55 g/m2.

6. "Reinforced 100% Polyester Material", according to Claim 1, characterized by the fact that the polyester copolymer thermoplastic paste is found at a preferable concentration of 15 to 20 g/m2.

7. "Process for the Manufacture of a Laminated Film", according to which the reinforced material contemplated under Claim 1, that is, a polyester obtained by the polymeric synthesis of terephthalic acid monomers with ethylene glycol, is characterized by being laminated through a continuous process of physical bonding, with the grid (1) having the warp fibers pulled and covered by an upper and lower coating of a mixture of small woof fibers(2) with thermoplastic paste(3); thereupon it is bonded by pressure and heat (thermobonding) at 180 to 300°C, in a series of metallic cylinders or presses.

8. "Process for the Manufacture of a Laminated Film", according to Claim 7, characterized by the fact that the bonding temperature should range preferably between 240 and 260°C.

9. "Reinforced Laminated Film", obtained from the material under Claim 1, characterized by a 100% polyester laminated film(4), self-thermosealable by heat and pressure, porous, humidity and gas permeable, impermeable to fine powder and of high mechanical resistance, thermobonding occurring between 80 and 160°C, and which neither loses its physical characteristics in the area of softening point nor when wet, with air permeability of 5 to 25m3/m2-minutes, and without thermosealable adhesive.

10. "Reinforced Laminated film", according to Claim 9, characterized by the fact that air permeability is preferably 12 to 15m3/m2-minutes.

11. "Reinforced Laminated Film", according to Claim 9, characterized by the fact that weight per area of laminated material is 40 to 110 g/m2, preferably between 60 to 100 g/m2.

12. "Reinforced Laminated Film", according to Claim 9, characterized by the fact that weight per area of laminated film is particularly between 70 to 95g/m2.

13. "Applicator containing a fumigating agent", which utilizes the laminated film (4) made of reinforced 100% polyester material, and characterized by the fact that it composes an applicator containing a pest control agent, either solid, granulated or powder, obtained by thermobonding and pressure of two layers of laminated film (4), thereby forming an applicator sachet (6), with sealed borders measuring at least 1 cm.

14. "Applicator containing a fumigating agent", according to Claim 13, characterized by constituting envelopes, bags, sachets, interlinked or otherwise, in any geometrical shape, to hold hydrolysable metal phosphide - a fumigating agent - and having flexible connections.

15. Applicator containing a fumigating agent", according to Claim 13, characterized by the fact that it facilitates water penetration at the time of disposal of residual aluminium phosphide.

16. "Applicator containing a fumigating agent", according to Claim 13, characterized by the fact that it is packed in a gas and humidity-proof container, for storage and carriage.

17. Applicator containing a fumigating agent", according to Claim 13, characterized by its use for the fumigation of products stored in warehouses, silos, cargo carrying vehicles, vessels and others.

18. "Applicator containing a fumigating agent", according to Claim 13, characterized by the fact that it is occasionally used as a gas absorber, such as phosphine, making up "pads" for use in hermetically sealed flasks or tins, such pads being made of the same sachet material, with a mixture of chemical non-toxic powder for absorption of any gas which may be found in that kind of container.

19. "Applicator containing a fumigating agent", according to Claim 13, characterized by the fact that it is not biodegradable in such conditions as defined before.

## Patentansprüche

1. "Verstärktes Material aus 100 %igem Polyester zur Herstellung einer laminierten Folie zur Bildung eines Applikators zur Aufnahme von Schädlingsbekämpfungsmitteln" **gekennzeichnet durch** ein verstärktes Material aus 100 %igem Polyester, das ein Gitter (1) aus Polyestergarn mit einer Textur von 1 x 1 mm bis zu 8 x 8 mm und einem Gewicht pro Fläche von 8 bis 40 g/m² aufweist; Polyesterwebfasern (2) mit 1 bis 6 dTex in einer Konzentration von 30 bis 70 g/m²; eine thermoplastische Polyestercopolymerpaste mit einer Konzentration von 5 bis 50 g/m².

2. "Verstärktes Material aus 100 %igem Polyester" nach Anspruch 1, **dadurch gekennzeichnet,** daß die Gittertextur (1) vorzugsweise 5 x 2 mm ist.

3. "Verstärktes Material aus 100 %igem Polyester" nach Anspruch 1 und 2, **dadurch gekennzeichnet,** daß die Gittertextur (1) insbesondere 4 x 3 mm ist.

4. "Verstärktes Material aus 100 %igem Polyester" nach Anspruch 1, **dadurch gekennzeichnet,** daß das Gewicht pro Fläche des Gitters vorzugsweise zwischen 15 und 25 g/m² liegt.

5. "Verstärktes Material aus 100 %igem Polyester" nach Anspruch 1, **dadurch gekennzeichnet,** daß die Webfasern vorzugsweise zwischen 1,3 und 3,3 dTex aufweisen und in einer bevorzugten Konzentration von 50 bis 55 g/m² vorhanden sind.

6. "Verstärktes Material aus 100 %igem Polyester" nach Anspruch 1, **dadurch gekennzeichnet,** daß die thermoplastische Polyestercopolymerpaste in einer bevorzugten Konzentration von 10 bis 20 g/m² vorhanden ist.

7. "Verfahren zur Herstellung einer laminierten Folie" nach dem das in Anspruch 1 betrachtete, verstärkte Material, ein Polyester, das aus der polymerischen Synthese von Monomeren der Terephtalsäure mit Äthylenglykol gewonnen wird, **dadurch gekennzeichnet** ist, daß es in einem kontinuierlichen Prozeß physikalischer Verbindung laminiert wird, wobei die Kettfasern des Gitters (1) gezogen und mit einer oberen und unteren Beschichtung aus einer Mischung aus kleinen Webfasern (2) mit einer thermoplastischen Paste (3) bedeckt werden, worauf es durch Druck und Hitze (thermisches Verbinden) bei 180 bis 300 °C in einer Reihe von metallischen Zylindern oder Pressen verbunden wird.

8. "Verfahren zur Herstellung einer laminierten Folie" nach Anspruch 7, **dadurch gekennzeichnet,** daß die Verbindungstemperatur vorzugsweise zwischen 240 und 260 °C liegt.

9. "Verstärkte, laminierte Folie", erhalten aus dem Material nach Anspruch 1, **gekennzeichnet** durch eine laminierte Folie (4) aus 100 %igem Polyester, durch Hitze und Druck thermisch dichtend, porös, feuchtigkeits- und gasdurchlässig, undurchlässig für feines Pulver und mit einer hohen, mechanischen Widerstandsfähigkeit, wobei die thermische Bindung zwischen 80 und 160 °C auftritt, und welche ihre physikalischen Eigenschaften weder im Bereich des Erweichungspunktes verliert noch, wenn sie naß ist, wobei sie eine Luftdurchlässigkeit von 5 bis 25 m³/m²-min besitzt und keinen thermodichtenden Klebstoff aufweist.

10. "Verstärkte, laminierte Folie" nach Anspruch 9, **dadurch gekennzeichnet,** daß die Luftdurchlässigkeit vorzugsweise zwischen 12 und 15 m³/m²-min liegt.

11. "Verstärkte, laminierte Folie" nach Anspruch 9, **dadurch gekennzeichnet,** daß das Gewicht pro Fläche des beschichteten Materials zwischen 40 und 110 g/m² und vorzugsweise zwischen 60 und 100 g/m² liegt.

12. "Verstärkte, laminierte Folie" nach Anspruch 9, **dadurch gekennzeichnet,** daß das Gewicht pro Fläche der laminierten Folie insbesondere zwischen 70 und 95 g/m² liegt.

13. "Applikator mit einem ausgasenden Mittel", der die laminierte Folie (4) aus verstärktem Material aus 100 %igem Polyester verwendet, und **dadurch charakterisiert** ist, daß er einen Applikator mit einem Schädlingsbekämpfungsmittel enthält, entweder fest, granuliert oder pulverförmig, der durch thermisches Verbinden und Druck aus zwei Schichten von laminierten Folien (4) erhalten wird, wobei ein Applikatorbeutel (6) mit abgedichteten Kanten, die mindestens 1 cm betragen, gebildet wird.

14. "Applikator mit einem ausgasenden Mittel" nach Anspruch 13, **dadurch gekennzeichnet,** daß Umschläge, Beutel, Kissen in irgendeiner geometrischen Form gebildet werden, die untereinander oder auf eine andere Weise verbunden sind, so daß hydrolysierbares Metallphosphid - ein ausgasendes Mittel - gehalten wird und die flexible Verbindungen haben.

15. "Applikator mit einem ausgasenden Mittel" nach Anspruch 13, **dadurch gekennzeichnet,** daß es das Eindringen von Wasser zur Zeit der Beseitigung des restlichen Aluminiumphosphids erleichtert.

16. "Applikator mit einem ausgasenden Mittel" nach Anspruch 13, **dadurch gekennzeichnet,** daß er in einem gas- und feuchtigkeitsdichten Behälter zur Lagerung und für den Transport verpackt ist.

17. "Applikator mit einem ausgasenden Mittel" nach Anspruch 13, **dadurch gekennzeichnet,** daß er zur Begasung von Waren benutzt wird, die in Warenhäusern, Silos, lasttragenden Fahrzeugen, Gefäßen und anderem aufbewahrt sind.

18. "Applikator mit einem ausgasenden Mittel" nach Anspruch 13, **dadurch gekennzeichnet,** daß er gelegentlich als Gasabsorber, zum Beispiel für Phosphin verwendet wird, wobei Kissen für die Verwendung in hermetisch abgedichteten Flaschen oder Dosen hergestellt werden, wobei diese Kissen aus demselben Beutelmaterial hergestellt sind, mit einer Mischung aus einem chemisch ungiftigen Pulver zur Absorbtion jeglichen Gases, das sich in dieser Art von Behältern befindet.

19. "Applikator mit einem ausgasenden Mittel" nach Anspruch 13, **dadurch gekennzeichnet,** daß er unter den oben angegebenen Bedingungen biologisch abbaubar ist.

## Revendications

1. "Matériau renforcé à 100 % de polyester pour la fabrication d'un film stratifié pour former un applicateur destiné à contenir un agent de contrôle des nuisibles", caractérisé par un matériau renforcé à 100 % de polyester, comprenant une grille (1) de fils de polyester d'une texture de 1 x 1 mm à 8 x 8 mm, d'un poids par surface de 8 à 40 g/m2 ; les fibres polyester de trame (2) de 1 à 8 dTex dans une concentration de 30 à 70 g/m2 ; une pâte thermoplastique de copolymère de polyester dans une concentration de 5 à 50 g/m2.

2. "Matériau renforcé de 100 % de polyester", selon la revendication 1, caractérisé par le fait que la texture (1) de la grille est de préférence de 5 x 2 mm.

3. "Matériau renforcé de 100 % de polyester", selon les revendications 1 et 2, caractérisé par le fait que la texture (1) de la grille est en particulier de 4 x 3 mm.

4. "Matériau renforcé de 100 % de polyester", selon la revendication 1, caractérisé par le fait que le poids par surface de la grille est de préférence entre 15 et 25 g/m2.

5. "Matériau renforcé de 100 % de polyester", selon la revendication 1, caractérisé par le fait que les fibres de trame sont de préférence entre 1,3 et 3,3 dTex et sont dans une concentration de préférence de 50 à 55 g/m2.

6. "Matériau renforcé de 100 % de polyester", selon la revendication 1, caractérisé par le fait que la pâte thermoplastique de copolymère de polyester est d'une concentration de préférence de 15 à 20 g/m2.

7. "Procédé pour la fabrication d'un film stratifié", selon lequel le matériau renforcé considéré à la revendication 1, c'est-à-dire un polyester obtenu par la synthèse polymérique de monomères d'acide téréphtalique avec de l'éthylène glycol, est caractérisé par le fait qu'il est stratifié lors d'un processus continu de liage physique, la grille (1) ayant les fibres de chaîne tirées et couvertes par un revêtement supérieur et inférieur d'un mélange de petites fibres de trame (2) et de la pâte thermoplastique (3); après quoi, il est lié par pression et chaleur (thermoliage) à 180 à 300°C, dans une série de cylindres métalliques ou de presses.

8. "Procédé pour la fabrication d'un film stratifié" selon la revendication 7, caractérisé par le fait que la température de liage doit se trouver de préférence entre 240 et 260°C.

9. "Film stratifié renforcé", obtenu du matériau décrit à la revendication 1, caractérisé par un film (4) laminé de 100 % de polyester, auto-thermoscellable par la chaleur et la pression, poreux, perméable à l'humidité et au gaz, imperméable à la poudre fine et d'une grande résistance mécanique, le thermoliage se produisant entre 80 et 160°C, et qui ne perd ses caractéristiques physiques ni dans la région du point de ramollissement, ni lorsqu'il est mouillé, avec une perméabilité à l'air de 5 à 25 m3/m2-minute, et sans adhésif thermoscellable.

10. "Film renforcé stratifié" selon la revendication 9, caractérisé par le fait que la perméabilité à l'air est de préférence de 12 à 15 m3/m2-minute.

11. "Film renforcé stratifié" selon la revendication 9, caractérisé par le fait que le poids par surface du matériau stratifié est de 40 à 110 g/m2, et de préférence entre 60 à 100 g/m2.

12. "Film renforcé stratifié" selon la revendication 9, caractérisé par le fait que le poids par surface de film stratifié est en particulier entre 70 et 95 g/m2.

13. "Applicateur contenant un agent de fumigation", qui utilise le film stratifié (4) fait de matériau renforcé à 100 % de polyester, et caractérisé par le fait qu'il forme un applicateur contenant un agent de contrôle des nuisibles, soit solide, en granulés ou en poudre, obtenu par thermoliage et pression de deux couches de film stratifié (4), formant par à un sachet applicateur (6), avec des bords scellés mesurant au moins 1 cm.

14. "Applicateur contenant un agent de fumigation", selon la revendication 13, caractérisé en ce qu'il constitue des enveloppes, des sacs, des sachets, en série ou autrement, de n'importe quelle forme géométrique, destinés à contenir du phosphure métallique hydrolysable ― un agent de fumigation -, et ayant des connexions flexibles.

15. "Applicateur contenant un agent de fumigation", selon la revendication 13, caractérisé par le fait qu'il facilite la pénétration de l'eau au moment de l'élimination du phosphure d'aluminium résiduel.

16. "Applicateur contenant un agent de fumigation", selon la revendication 13, caractérisé par le fait qu'il est emballé dans un conteneur imperméable au gaz et à l'humidité, pour stockage et transport.

17. "Applicateur contenant un agent de fumigation", selon la revendication 13, caractérisé par son utilisation dans la fumigation de produits stockés dans des entrepôts, silos, véhicules transportant des marchandises, vaisseaux et autres.

18. "Applicateur contenant un agent de fumigation", selon la revendication 13, caractérisé par le fait qu'il est occasionnellement utilisé en tant qu'un absorbeur de gaz, tel que le phosphine, formant des "coussinets" pour une utilisation dans des flacons ou des boîtes hermétiquement fermés, lesdits coussinets étant faits du même matériau que les sachets, avec un mélange de poudre chimique non toxique pour l'absorption de tout gaz qui pourrait se trouver dans ce type de conteneur.

19. "Applicateur contenant un agent de fumigation", selon la revendication 13, caractérisé par le fait qu'il est biodégradable dans les conditions définies précédemment.
